# EUROPÄISCHE PATENTSCHRIFT

(11) **EP 3 042 233 B1**
(45) Veröffentlichungstag und Bekanntmachung des Hinweises auf die Patenterteilung: **12.03.2025**
(21) Anmeldenummer: 14758922.0
(22) Anmeldetag: 03.09.2014
(51) Int. Cl.: G02B 21/00, G02B 27/10, G01J 3/12, G02F 1/11

(54) **MIKROSKOP MIT EINER AKUSTOOPTISCHEN VORRICHTUNG**
MICROSCOPE WITH AN ACOUSTO-OPTICAL DEVICE
MICROSCOPE DOTÉ D'UN DISPOSTIIF ACOUSTO-OPTIQUE

(30) Priorität: 03.09.2013 DE 102013217495; 23.12.2013 DE 102013227103
(43) Veröffentlichungstag der Anmeldung: 13.07.2016
(73) Patentinhaber: Leica Microsystems CMS GmbH, 35578 Wetzlar (DE)
(72) Erfinder: SEYFRIED, Volker, 69226 Nussloch (DE); KRISHNAMACHARI, Vishnu, Vardhan, 64342 Seeheim-Jugenheim (DE)
(74) Vertreter: Bradl, Joachim
(86) Internationale Anmeldenummer: PCT/EP2014/068750
(87) Internationale Veröffentlichungsnummer: WO 2015/032822

(56) Entgegenhaltungen:
- WO-A2-00/37985
- WO-A2-00/37985
- DE-A1- 102010 033 722
- DE-A1- 102010 033 722
- DE-A1- 102010 033 722
- US-A1- 2009 046 360
- US-A1- 2009 046 360
- THOMAS J FELLERS: "Olympus Fluoview Resource Center: Acousto-Optic Tunable Filters", 19 March 2013 (2013-03-19), XP055153859, Retrieved from the Internet <URL:https://web.archive.org/web/20130319085942/http://www.olympusconfocal.com/theory/aotfintro.html> [retrieved on 20141119]
- THOMAS J FELLERS: "Olympus Fluoview Resource Center: Acousto-Optic Tunable Filters", 19 March 2013 (2013-03-19), XP055153859, Retrieved from the Internet <URL:https://web.archive.org/web/20130319085942/http://www.olympusconfocal.com/theory/aotfintro.html> [retrieved on 20141119]
- THOMAS J FELLERS: "Olympus Fluoview Resource Center: Acousto-Optic Tunable Filters", 19 November 2014 (2014-11-19), XP055153959, Retrieved from the Internet <URL:http://www.olympusconfocal.com/theory/aotfintro.html> [retrieved on 20141119]
- THOMAS J FELLERS: "Olympus Fluoview Resource Center: Acousto-Optic Tunable Filters", 19 March 2013 (2013-03-19), XP055153859, Retrieved from the Internet <URL:https://web.archive.org/web/20130319085942/http://www.olympusconfocal.com/theory/aotfintro.html> [retrieved on 20141119]

## Beschreibung

Die Erfindung betrifft ein Scanmikroskop zur Beobachtung von von einer Probe emittiertem Fluoreszenzlicht mit einer akustooptischen Vorrichtung, die mit einer mechanischen Welle, die durch eine, vorzugsweise einstellbare, Frequenz charakterisiert ist, aus einem polychromatischen und kollinearen Detektionslichtbündel Anteile von an einer Probe gestreutem und/oder reflektiertem Beleuchtungslicht einer der Frequenz zugeordneten Beleuchtungslichtwellenlänge entfernt.

Ein solches Scanmikroskop kann insbesondere als konfokales Scanmikroskop ausgebildet sein.

In der Scanmikroskopie wird eine Probe mit einem Lichtstrahl beleuchtet, um das von der Probe emittierte Reflexions- oder Fluoreszenzlicht zu beobachten. Der Fokus eines Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Dimensionen abgetastet. Ein konfokales Scanmikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird beispielsweise über einen Strahlteiler eingekoppelt.

Das vom Objekt kommende Fluoreszenzlicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt.

In der Fluoreszenzmikroskopie müssen die Anteile von an der Probe reflektiertem und an der Probe gestreutem Beleuchtungslicht aus dem Detektionslicht entfernt werden, um ausschließlich das Fluoreszenzlicht detektieren zu können. Hierzu wird bei einem klassischen Mikroskop ein dichroitischer Filter, als sog. Hauptstrahlteiler verwendet.

Anstelle eines solchen Strahlteilers kann zum Einkoppeln des Anregungslichts mindestens einer Lichtquelle in das Mikroskop und zum Ausblenden des am Objekt gestreuten und reflektierten Anregungslichts bzw. der Anregungswellenlänge aus dem über den Detektionsstrahlengang vom Objekt kommenden Lichts auch eine als akustooptisches Bauteil ausgestaltete optische Anordnung vorgesehen sein, was beispielsweise aus der Deutschen Offenlegungsschrift DE 199 06 757 A1 bekannt ist. Die aus dieser Druckschrift bekannte optische Anordnung ist zur variablen Ausgestaltung bei einfachster Konstruktion dadurch gekennzeichnet, dass durch das spektral selektive Element Anregungslicht unterschiedlicher Wellenlänge ausblendbar ist. Alternativ ist eine solche optische Anordnung dadurch gekennzeichnet, dass das spektral selektive Element auf die auszublendende Anregungswellenlänge einstellbar ist.

Die Funktionsweise eines solchen akustooptischen Bauteils beruht im Wesentlichen auf der Wechselwirkung des Beleuchtungslichtes mit einer mechanischen Welle. Wobei bei einigen akustooptischen Bauteilen,, beispielsweise bei einem AOTF, die mechanische Welle eine ganz bestimmte Frequenz aufweisen muss, damit genau für das Licht der gewünschten Beleuchtungslichtwellenlänge die Bragg-Bedingung erfüllt ist. Licht, für das die Bragg-Bedingung nicht erfüllt ist, wird bei diesen akustooptischen Bauteilen durch die mechanische Welle nicht abgelenkt. Soll Licht mehrerer Wellenlängen als Beleuchtungslicht zur Beleuchtung der Probe verwendet werden, so müssen auch mehrere, unterschiedliche, mechanische Wellen gleichzeitig erzeugt werden.

Akustooptische Bauteile bestehen in der Regel aus einem sogenannten akustooptischen Kristall, an dem ein elektrischer Wandler (in der Literatur oft als Transducer bezeichnet) angebracht ist. Üblicherweise umfasst der Wandler ein piezoelektrisches Material sowie eine darüber liegende und eine darunter liegende Elektrode. Durch elektrisches Beschalten der Elektroden mit Radiofrequenzen, die typischer Weise im Bereich zwischen 30 MHz und 800 MHz liegen, wird das piezoelektrische Material zum Schwingen gebracht, so dass eine akustische Welle, d.h. eine Schallwelle, entstehen kann, die nach ihrer Entstehung den Kristall durchläuft. Meist wird die akustische Welle nach dem Durchlaufen eines optischen Wechselwirkungsgebiets an der gegenüberliegenden Kristallseite absorbiert oder wegreflektiert.

Akustooptische Kristalle zeichnen sich dadurch aus, dass die entstehende Schallwelle die optischen Eigenschaften des Kristalls verändert, wobei durch den Schall eine Art optisches Gitter oder eine vergleichbare optisch aktive Struktur, beispielsweise ein Hologramm, induziert wird. Durch den Kristall tretendes Licht erfährt an dem optischen Gitter eine Beugung. Entsprechend wird das Licht in verschiedenen Beugungsordnungen in Beugungsrichtungen gelenkt. Es gibt akustooptische Bauteile, die das gesamte einfallende Licht mehr oder weniger unabhängig von der Wellenlänge beeinflussen. Dazu sei lediglich beispielhaft auf Bauteile wie AOM (acousto optical modulator), AOD (acousto optical deflector) oder Frequenzschieber verwiesen. Außerdem gibt es auch bereits Bauteile, die beispielsweise abhängig von den eingestrahlten Radiofrequenzen selektiv auf einzelne Wellenlängen wirken (AOTF; acousto optical tunable filter). Häufig bestehen die akustooptischen Elemente aus doppelbrechenden Kristallen, wie beispielsweise Tellurdioxid, wobei insbesondere die Lage der Kristallachse relativ zur Einfallsrichtung des Lichts und seiner Polarisation die optische Wirkung des jeweiligen Elements bestimmt. Diese Zusammenhänge sind beispielsweise aus DE 10 2006 053 187 A1 bekannt.

Die Arbeitsweise eines Scanmikroskops, das ein akustooptisches Bauteil als Hauptstrahlteiler aufweist, ist detailliert in DE 101 37 155 A1 beschrieben. Dort ist auch beschrieben, dass die das tangential polarisierte Beleuchtungslicht ablenkende mechanische Welle eines ersten AOTF ausschließlich die Anteile der Beleuchtungslichtwellenlänge mit tangentialer Linearpolarisationsrichtung aus dem Detektionslicht vollständig entfernen kann. Allerdings weist das Detektionslicht sowohl Anteile mit sagittaler, als auch mit tangentialer Polarisationsrichtung auf.

Aus diesem Grund ist dem akustooptischen Bauteil ein Kompensationselement nachgeschaltet, das als weiteres akustooptisches Bauteil ausgeführt ist. Das weitere akustooptische Bauteil ist ebenfalls als AOTF ausgeführt und wird von einer weiteren Hochfrequenzquelle mit einer weiteren elektromagnetischen Hochfrequenzwelle einer anderen Frequenz angesteuert. Die HF-Frequenz der weiteren elektromagnetischen Hochfrequenzwelle ist derart gewählt, dass die Anteile des Detektionslichts, die die Wellenlänge des Beleuchtungslichts und eine sagittale Polarisationsrichtung aufweisen, ausgeblendet werden. Diese Vorgehensweise ist nötig, weil für das aus dem Detektionslicht auszublendende Licht mit sagittaler Polarisationsrichtung die Bragg-Bedingung für die Beugung an einer mechanischen Welle nur erfüllt ist, wenn die mechanische Welle eine andere Frequenz als für das Licht mit tangentialer Polarisationsrichtung aufweist. Daher muss das Mikroskop für jede Beleuchtungslichtwellenlänge zwei unterschiedliche HF-Frequenzen zur gleichzeitigen Erzeugung von zwei mechanischen Wellen unterschiedlicher Frequenz bereitstellen. Darüber hinaus ist zwingend ein weiteres akustooptisches Bauteil mit einem weiteren Schallerzeuger notwendig. Soll beispielsweise eine Beleuchtung mit Beleuchtungslicht von vier Wellenlängen erfolgen, ist eine Fluoreszenzlichtdetektion nur möglich, wenn gleichzeitig acht elektromagnetische Hochfrequenzwellen bereitgestellt und daraus - verteilt auf zwei akustooptische Bauteile - acht mechanische Wellen unterschiedlicher Frequenzen erzeugt werden.

In der DE 10 2010 033722 A1 wird eine Anordnung zur Eliminierung unerwünschter Strahlungsanteile aus detektiertem Licht, das von einer beleuchteten Probe kommt, beschrieben, wobei das von der Probe kommende Licht Anteile von in der Probe angeregtem Licht (Anregungslicht) und Beleuchtungslicht enthält, und wobei im Detektionsstrahlengang mindestens ein akustooptischer durchstimmbarar Filter (AOTF) vorgesehen ist und über mindestens ein Polarisationselement eine Aufspaltung des Probenlichtes in Polkomponenten (Polanteile), vorzugsweise zueinander senkrecht, erfolgt, wobei mindestens eine Polkomponente mindestens zweimal denselben AOTF durchläuft oder einen ersten und mindestens einen zweiten AOTF durchläuft.

Der Artikel von Thomas J. Fellers "Olympus Fluoview Resource Center: Acousto-Optic Tunable Filters" beschreibt das Wirkungsprinzip eines AOTF im Zusammenhang mit konfokaler Mikroskopie.

Aus der WO 00/37985 A2 ist eine Anordnung eines lichtbeugenden Elementes zur Separierung von Anregungs- und Emissionslicht in einem mikroskopischen Strahlengang bekannt, insbesondere in einem Laser-Scanning-Mikroskop, wobei das lichtbeugende Element sowohl vom Anregungslicht als auch vom Emissionslicht durchlaufen wird und mindestens eine Wellenlänge der Anregung durch Beugung beeinflusst, während andere von der Probe emittierte Wellenlängen das Element unbeeinflusst durchlaufen und dadurch räumlich vom Anregungslicht getrennt werden. Das lichtbeugende Element kann ein AOTF sein.

Es ist daher die Aufgabe der vorliegenden Erfindung ein Mikroskop mit einem akustooptischen Bauteil anzugeben, das eine flexible Fluoreszenzlichtdetektion mit geringerem Aufwand erlaubt.

Die Aufgabe wird durch ein Scanmikroskop mit den Merkmalen von Anspruch 1 gelöst. Vorteilhafte Ausführungsformen sind in den abhängigen Ansprüchen angegeben. In erfindungsgemäßer Weise wurde zunächst erkannt, dass durch das Einkoppeln von je zwei mechanischen Wellen pro Beleuchtungslichtwellenlänge eine besonders große Wärmeleistung in den Kristall bzw. die Kristalle eingetragen wird, was letztlich die Beugungseffizienz reduziert. Hinzu kommt, dass durch die unvermeidbaren Temperaturschwankungen auch die Ablenkungsrichtungen und die Lichtleistungen schwanken.

Außerdem hat sich in der Praxis gezeigt, dass oftmals störende Streifen im Bild eines Scanmikroskops auftreten. Diesbezüglich wurde erfindungsgemäß erkannt, dass es zu einer Schwebung kommen kann, wenn die Wellenlängen der erforderlichen Schallwellen überlappen, was letztlich zu periodischen Schwankungen der Beleuchtungslichtleistung führt, wenn über das akustooptische Bauteil auch Beleuchtungslicht auf einen Beleuchtungsstrahlengang gelenkt wird.

In erfindungsgemäßer Weise wurde außerdem erkannt, dass der Kristall, die mechanische Welle und das in den Kristall einfallende Detektionslichtbündel derart zueinander ausgerichtet werden können, dass mit ein und derselben mechanischen Welle eine gleichzeitige Ablenkung von Detektionslicht gleicher Wellenlänge, jedoch unterschiedlicher Linearpolarisationsrichtung möglich ist. Die Ablenkung erfolgt abhängig von der Linearpolarisationsrichtung zwar in unterschiedliche Richtungen, was jedoch in Bezug auf das erfindungsgemäße Mikroskop keine Rolle spielt, weil ohnehin nur das verbleibende Detektionslicht detektiert werden soll und der aus dem Detektionslicht entfernte Anteil nicht mehr gebraucht wird.

Die Erfindung hat den Vorteil, dass pro verwendeter Beleuchtungslichtwellenlänge lediglich eine einzige HF-Frequenz zur Erzeugung einer einzigen mechanischen Welle für das Entfernen des unerwünschten, an der Probe reflektierten oder gestreuten Beleuchtungslichts erforderlich ist, während bisher zwei HF-Frequenzen, nämlich eine für die eine Polarisationsrichtung und eine für die andere Polarisationsrichtung, erforderlich waren.

Die Erfindung hat den weiteren Vorteil, dass gegenüber den aus dem Stand der Technik bekannten Mikroskopen mit demselben HF-Generator die doppelte Anzahl von Beleuchtungslichtwellenlängen aus dem Detektionslicht entfernt werden kann und, was weiter unten ausführlich erklärt ist, auch die Möglichkeit zum Lenken von Beleuchtungslicht der doppelten Anzahl von Wellenlängen auf einen Beleuchtungsstrahlengang ermöglicht ist.

Zumeist weisen die HF-Generatoren handelsüblicher akustooptischer Bauteile nicht mehr als acht Kanäle auf, so dass mit dem erfindungsgemäßen Mikroskop das Entfernen von Beleuchtungslicht von acht Wellenlängen (statt bislang nur vier Wellenlängen) aus dem von der Probe kommenden Detektionslicht ermöglicht ist. Bei einer besonderen Ausführung kann gleichzeitig mit denselben mechanischen Wellen die Einkopplung von Beleuchtungslicht von acht (statt bislang vier) Wellenlängen auf einen Beleuchtungsstrahlengang erfolgen.

Ein weiterer Vorteil des erfindungsgemäßen Mikroskops liegt darin, dass der oben beschriebene Wärmeeintrag in den Kristall halbiert und das Problem der zuweilen auftretenden Schwebungen vollständig vermieden ist. Insoweit hat das erfindungsgemäße Mikroskop den Vorteil, dass die Gefahr von temperaturbedingten Schwankungen der Lichtleistung zumindest verringert und das oben geschilderte Problem von Streifen im Bild vollständig ausgeräumt ist.

Bei einer besonderen Ausführung des Mikroskops ist vorgesehen, dass die erste Linearpolarisationsrichtung die Linearpolarisationsrichtung des ordentlichen Lichtes bezogen auf eine Doppelbrechungseigenschaft des Kristalles ist und/oder dass die zweite Linearpolarisationsrichtung die Linearpolarisationsrichtung des außerordentlichen Lichtes bezogen auf eine Doppelbrechungseigenschaft des Kristalles ist. Alternativ oder zusätzlich kann auch vorgesehen sein, dass die erste oder die zweite Linearpolarisationsrichtung in der Ebene angeordnet ist, die von der Ausbreitungsrichtung der mechanischen Welle und der Ausbreitungsrichtung des Detektionslichtbündels aufgespannt ist.

Bei einer ganz besonders vorteilhaften Ausführung ist vorgesehen, dass der verbliebene Teil des Detektionslichtbündels den Kristall kollinear verlässt. Dies kann beispielsweise durch eine geeignete Winkelausrichtung der Eintrittsfläche, durch die das Detektionslichtbündel in den Kristall eintritt, und eine geeignete Winkelausrichtung der Austrittsfläche, durch die das Detektionslichtbündel den Kristall verlässt, erreicht werden. Es ist alternativ oder zusätzlich auch möglich, eine Kollinearität des verbliebenen Teils des Detektionslichtbündels mit Hilfe eines zusätzlichen, dispersiven optischen Bauteils zu erreichen, was weiter unten detaillierter beschrieben ist.

Bei einer besonders vorteilhaften Ausführungsform eines erfindungsgemäßen Mikroskops spaltet die akustooptische Vorrichtung mit der mechanischen Welle aus wenigstens einem polychromatischen und vorzugsweise kollinearen Primärlichtbündel Beleuchtungslicht einer der Frequenz der mechanischen Welle zugeordneten Beleuchtungslichtwellenlänge ab und lenkt dieses zur Beleuchtung einer Probe auf einen Beleuchtungsstrahlengang.

Das Primärlicht kann von einer einzigen Lichtquelle stammen. Es kann jedoch auch vorgesehen sein, dass das Primärlicht von mehreren Lichtquellen stammt. Insbesondere kann vorgesehen sein, dass die Primärlichtstrahlenbündel unterschiedlicher Lichtquellen zu einem kollinearen Primärlichtbündel vereinigt werden.

Insbesondere kann vorgesehen sein, dass die Lichtquelle als breitbandige Weißlichtquelle ausgebildet ist. Eine solche Lichtquelle kann insbesondere ein spezielles optisches Element, wie beispielsweise ein mikrostrukturiertes optisches Element und/oder eine tapered Faser und/oder eine photonische Kristallfaser und/oder einen photonischen Kristall und/oder ein Photonic-Band-Gap-Material und/oder ein vergleichbares, optisches Nichtlinearitäten induzierendes Element, aufweisen, das einfallendes Primärlicht, insbesondere das Licht eines Pulslasers, spektral verbreitert. Eine solche Lichtquelle kann Primärlicht einer spektralen Breite von mehreren 100 nm zur Verfügung stellen, so dass der Benutzer mit Hilfe des akustooptischen Bauteils aus diesem breiten Spektrum individuell genau das Beleuchtungslicht mit der Wellenlänge bzw. den Wellenlängen auswählen kann, das er für sein Experiment benötigt.

Insbesondere kann vorteilhaft vorgesehen sein, dass das unpolarisierte Licht einer solchen Weißlichtquelle in zwei Anteile aufgespalten wird, deren Linearpolarisationsrichtungen senkrecht zueinander stehen. In vorteilhafter Weise kann der eine Anteil entgegengesetzt der Richtung der ersten Beugungsordnung des ordentlichen Lichtes (bezogen auf den gebeugten Anteil des Detektionslichtes) eingekoppelt werden, während der andere Anteil entgegengesetzt der Richtung der zweiten Beugungsordnung des außerordentlichen Lichts (bezogen auf den gebeugten Anteil des Detektionslichtes) eingekoppelt werden kann. Das aus den beiden Anteilen gebeugte Beleuchtungslicht verläuft so kollinear.

Auf diese Weise steht das gesamte Primärlicht der Weißlichtquelle zur Verfügung, um aus diesem Primärlicht Beleuchtungslicht einer bestimmten Wellenlänge oder bestimmter Wellenlängen mit Hilfe der akustooptischen Vorrichtung auf den Beleuchtungslichtstrahlengang des Mikroskops und damit zur Probe zu lenken. Dies hat gegenüber den aus dem Stand der Technik bekannten akustooptischen Hauptstrahlteilern den besonderen Vorteil, dass das gesamte Primärlicht einer solchen Lichtquelle genutzt werden kann. Natürlich gilt gleiches auch für andere Lichtquellen, die unpolarisiertes Licht emittieren.

Zusätzlich zu einer solchen Weißlichtquelle können mehrere weitere Lichtquellen vorhanden sein, deren Primärlichtbündel mit dem Primärlichtbündel der Weißlichtquelle vereinigt werden.

Nach einem unabhängigen Erfindungsgedanken ist bei einer ganz besonders vorteilhaften Ausführung vorgesehen, dass die akustooptische Vorrichtung mit der mechanischen Welle sowohl aus einem ersten polychromatischen und vorzugsweise kollinearen Primärlichtbündel mit einer ersten Linearpolarisationsrichtung, als auch aus einem zweiten polychromatischen und vorzugsweise kollinearen Primärlichtbündel mit einer zweiten, zur ersten Linearpolarisationsrichtung senkrechten Linearpolarisationsrichtung, jeweils Beleuchtungslicht der der Frequenz der mechanischen Welle zugeordneten Beleuchtungslichtwellenlänge abspaltet und zur Beleuchtung einer Probe auf einen Beleuchtungsstrahlengang lenkt. Auf diese Weise kann mit einer einzigen mechanischen Welle aus den beiden Primärlichtbündeln unterschiedlicher Linearpolarisationsrichtung jeweils genau der Anteil der einen gewünschten Beleuchtungslichtwellenlänge ausgewählt und zur Beleuchtung einer Probe verwendet werden.

Diese Ausführung hat den ganz besonderen Vorteil, dass das gesamte Primärlicht einer Lichtquelle, wie beispielsweise das Primärlicht einer Weißlichtquelle mit einem mikrostrukturierten Element, verwendet werden kann, die - anders als beispielsweise ein Laser - unpolarisiertes Licht emittiert. Dies erfindungsgemäß in der Weise, dass das unpolarisierte Primärlicht beispielsweise mit Hilfe eines Polarisationsstrahlteilers in das erste und das zweite Primärlichtbündel aufgespalten wird und anschließend die beiden Primärlichtbündel (in der Regel an unterschiedlichen Einkoppelorten und/oder unter unterschiedlichen Einfallswinkeln) in die akustooptische Vorrichtung, insbesondere in den Kristall, eingekoppelt werden. Dies vorzugsweise derart, dass die zur Beleuchtung der Probe ausgewählten Anteile der beiden Primärlichtbündel mit der gewünschten Beleuchtungslichtwellenlänge von derselben mechanischen Welle abgespalten und auf den vorzugsweise gemeinsamen Beleuchtungsstrahlengang zur Beleuchtung einer Probe gelenkt werden.

Gegenüber den aus dem Stand der Technik bekannten Mikroskopen hat das erfindungsgemäße Mikroskop also den Vorteil, dass auch unpolarisiertes Primärlicht verwendet werden kann, ohne dass die Hälfte der Lichtleistung verloren geht.

Natürlich kann das erfindungsgemäße Mikroskop auch in der Weise ausgestaltet sein, dass, wie bereits an einigen Stellen angedeutet, mehrere mechanische Wellen gleichzeitig zum Entfernen von Beleuchtungslicht mehrerer unterschiedlicher Wellenlängen aus dem Detektionslicht und/oder zum Lenken von Beleuchtungslicht mehrerer unterschiedlicher Wellenlängen auf den Beleuchtungsstrahlengang zum Einsatz kommen, wobei jedoch in vorteilhafter Weise pro Beleuchtungslichtwellenlänge in dem Kristall lediglich eine einzige mechanische Welle erzeugt wird. Dies ist nachfolgend im Detail beschrieben:
So ist bei einer besonderen Ausführung vorgesehen, dass die akustooptische Vorrichtung mit mehreren mechanischen Wellen, die jeweils durch unterschiedliche Frequenzen charakterisiert sind, aus dem Detektionslichtbündel Anteile von an einer Probe gestreutem und/oder reflektiertem Beleuchtungslicht mehrerer Beleuchtungslichtwellenlängen entfernt, wobei jeder Frequenz eine der Beleuchtungslichtwellenlängen zugeordnet ist, und wobei jede der mechanischen Wellen jeweils sowohl den die ihrer Frequenz zugeordnete Beleuchtungswellenlänge aufweisenden Anteil mit einer ersten Linearpolarisationsrichtung, also auch den Anteil mit einer zweiten, zur ersten Linearpolarisationsrichtung senkrechten Linearpolarisationsrichtung ablenkt und dadurch aus dem Detektionslichtbündel entfernt.

Hierbei kann insbesondere vorgesehen sein, dass die mechanischen Wellen dieselbe Ausbreitungsrichtung aufweisen und/oder von demselben Schallerzeuger erzeugt sind. Der Schallerzeuger ist vorzugsweise an einer Außenfläche des Kristalls befestigt, wobei die Ausbreitungsrichtung der mechanischen Welle relativ zu dem Kristall und seiner Gitterstruktur durch die Ausrichtung dieser Außenfläche relativ zum Kristallkörper bestimmt ist, die durch den Kristallschliff festlegbar ist.

Es kann vorteilhaft auch vorgesehen sein, dass die akustooptische Vorrichtung mit den mehreren mechanischen Wellen aus polychromatischem Primärlicht wenigstens einer Lichtquelle Beleuchtungslicht mehrerer Beleuchtungslichtwellenlängen abspaltet und zur Beleuchtung einer Probe auf einen Beleuchtungsstrahlengang lenkt. Insbesondere kann vorgesehen sein, dass die akustooptische Vorrichtung mit den mehreren mechanischen Wellen, aus einem polychromatischen und vorzugsweise kollinearen Primärlichtbündel Beleuchtungslicht mehrerer Beleuchtungslichtwellenlängen zur Beleuchtung der Probe abspaltet und zur Beleuchtung einer Probe auf einen Beleuchtungsstrahlengang lenkt.

Wie bereits weiter oben in Bezug auf eine mechanische Welle beschrieben, kann vorteilhaft vorgesehen sein, dass die akustooptische Vorrichtung mit den mehreren mechanischen Wellen jeweils sowohl aus einem ersten polychromatischen und vorzugsweise kollinearen Primärlichtbündel mit einer ersten Linearpolarisationsrichtung, als auch aus einem zweiten polychromatischen und vorzugsweise kollinearen Primärlichtbündel mit einer zweiten, zur ersten Linearpolarisationsrichtung senkrechten Linearpolarisationsrichtung jeweils Beleuchtungslicht mehrerer Wellenlängen abspaltet und zur Beleuchtung einer Probe auf einen Beleuchtungsstrahlengang lenkt, wobei jeweils der Frequenz der jeweiligen mechanischen Welle (insb. jeweils zur Erfüllung der Bragg-Bedingung), für beide Polarisationsrichtungen des abzuspaltenden Anteils eine der Beleuchtungslichtwellenlängen zugeordnet ist.

Wie bereits erwähnt, kann vorteilhaft vorgesehen sein, das erste Primärlichtbündel und das zweite Primärlichtbündel unterschiedliche Polarisationsrichtungen aufweisen und/oder dass das erste Primärlichtbündel und das zweite Primärlichtbündel durch räumliche Aufspaltung eines Primär- Primärlichtbündels, beispielsweise mit Hilfe eines Polarisationsstrahlteilers, entstanden sind.

Insbesondere kann vorteilhaft vorgesehen sein, dass das erste Primärlichtbündel und das zweite Primärlichtbündel durch räumliche Aufspaltung eines unpolarisierten Primär-Primärlichtbündels, beispielsweise einer Weißlichtquelle, mit einem Polarisationsstrahlteiler, entstanden sind.

Wie bereits erwähnt kann vorteilhaft vorgesehen sein, dass das erste Primärlichtbündel dieselbe Linearpolarisationsrichtung aufweist, wie das von der mechanischen Welle die erste Beugungsordnung gebeugte ordentliche Licht, während das zweite Primärlichtbündel dieselbe Linearpolarisationsrichtung aufweist, wie das von der mechanischen Welle in die zweite Beugungsordnung gebeugte außerordentliche Licht. Auf diese Weise ist erreicht, dass sowohl das erste Primärlichtbündel, als auch das zweite Primärlichtbündel gleichzeitig in die akustooptische Vorrichtung eingekoppelt werden können und dass aus beiden Primärlichtbündeln mit einer mechanischen Welle für beide Polarisationsrichtungen Beleuchtungslicht der gewünschten, der Frequenz der mechanischen Welle zugeordneten Beleuchtungslichtwellenlänge auf einen Beleuchtungslichtstrahlengang gelenkt werden kann.

Es können, wie ebenfalls bereits erläutert, mit Hilfe von mehreren mechanischen Wellen auch jeweils das Licht aus beiden Primärlichtbündeln, das die gewünschten Wellenlängen aufweist, auf den Beleuchtungsstrahlengang gelenkt werden. Von Vorteil ist in jedem Fall, dass für jede Beleuchtungslichtwellenlänge lediglich eine einzige mechanische Welle benötigt wird.

Bei einer ganz besonders vorteilhaften Ausführung verlässt das abgespaltene Beleuchtungslicht die akustooptische Vorrichtung und/oder den Kristall als kollineares Beleuchtungslichtbündel. Diese Ausführung hat den Vorteil, dass das Beleuchtungslicht mit einem einzigen Objektiv und vorzugsweise unter Ausleuchtung der gesamten Objektivpupille auf bzw. in die Probe fokussiert werden kann.

Bei einer besonderen Ausführung weist der Kristall eine Eintrittsfläche für das Detektionslicht auf, wobei insbesondere vorgesehen sein kann, dass das Detektionslicht mit einem Einfallswinkel von Null Grad einfällt. Insbesondere kann auch vorgesehen sein, dass der Kristall eine Austrittsfläche für das Detektionslicht aufweist, durch die das Detektionslicht den Kristall vorzugsweise mit einem Ausfallswinkel von Null Grad verlässt.

Bei einer besonderen Ausführung weist der Kristall eine Eintrittsfläche und eine hierzu parallel ausgerichtete Austrittsfläche für das Detektionslicht auf.

Bei einer ganz besonders vorteilhaften Ausführung weist der Kristall wenigstens eine Eintrittsfläche für das Primärlicht wenigstens einer Lichtquelle auf. Wie bereits erläutert kann es sich bei der Lichtquelle vorteilhafter Weise um eine Lichtquelle handeln, die, beispielsweise mit Hilfe einer mikrostrukturierten Faser und/oder einer PBG-Faser, Primärlicht mit einem breiten Spektrum emittiert, so dass mit Hilfe der akustooptischen Vorrichtung jeweils die Lichtanteile der gewünschten Wellenlängen auf den Beleuchtungsstrahlengang des Mikroskops gelenkt werden können. Vorzugsweise erfolgt die Ablenkung des gewünschten Beleuchtungslichts durch Beugung an der mechanischen Welle (bzw. den mechanischen Wellen, wenn Licht mehrerer Wellenlängen als Beleuchtungslicht gewünscht ist) in die erste Beugungsordnung, während das verbleibende Licht ohne Wechselwirkung mit der mechanischen Welle (bzw. den Wellen) zu einer Strahlfalle gelangt.

Bei einer ganz besonders vorteilhaften Ausführung ist vorgesehen, dass der Kristall wenigstens eine Eintrittsfläche für das Primärlicht wenigstens einer Lichtquelle aufweist, das gleichzeitig die Austrittsfläche für das Detektionslicht ist.

Insbesondere kann auch vorgesehen sein, dass der Kristall eine Austrittsfläche für das Beleuchtungslicht aufweist, die gleichzeitig die Eintrittsfläche für das Detektionslicht ist und/oder dass der Kristall eine Eintrittsfläche für Primärlicht wenigstens einer Lichtquelle und eine Austrittsfläche für das abgespaltene Beleuchtungslicht aufweist, die derart zueinander ausgerichtet sind, dass das mit der mechanischen Welle abgelenkte Beleuchtungslicht mit einem Einfallswinkel von Null Grad auf die Austrittsfläche trifft.

Besonders vorteilhaft ist eine Ausführungsform, bei der der Kristall eine Eintrittsfläche für Primärlicht wenigstens einer Lichtquelle und eine Austrittsfläche für das abgespaltene Beleuchtungslicht aufweist, die derart zueinander ausgerichtet sind, dass das Primärlicht als kollineares Primärlichtbündel in den Kristall einkoppelbar ist und das mit der mechanischen Welle abgelenkte Beleuchtungslicht den Kristall als kollineares Beleuchtungslichtbündel verlässt.

Um eine Kollinearität der relevanten Lichtbündel zu erreichen, ist bei einer vorteilhaften Ausführungsform vorgesehen, dass die akustooptische Vorrichtung wenigstens ein dispersives optisches Bauteil aufweist, das eine (wenigstens teilweise) von dem Kristall hervorgerufene räumliche Farbaufspaltung des Primärlichtes und/oder des Beleuchtungslichtes und/oder des Detektionslichtes kompensiert.

Alternativ oder zusätzlich kann auch vorgesehen sein, dass die akustooptische Vorrichtung wenigstens ein dispersives optisches Bauteil aufweist, das eine (wenigstens teilweise) von dem Kristall hervorgerufene räumliche Farbaufspaltung des Primärlichtes und/oder des Beleuchtungslichtes und/oder des Detektionslichtes kompensiert und das mehrere Eintrittsflächen aufweist; insbesondere eine erste Eintrittsfläche für Licht mit einer ersten Linearpolarisationsrichtung und eine zweite Eintrittsfläche für Licht mit einer zweiten, zur ersten Linearpolarisationsrichtung senkrechten Linearpolarisationsrichtung.

Dieser Ausführungsformen haben den besonderen Vorteil, dass die akustooptische Vorrichtung mit einem Kristall ausgestattet sein kann, der eine verhältnismäßig einfache Grundform aufweisen kann. Beispielsweise kann vorgesehen sein, dass die Eintrittsfläche für das Detektionslicht parallel zur Austrittsfläche für das Detektionslicht ausgebildet ist. Eine räumliche Farbaufspaltung des beispielsweise durch die Austrittsfläche für das Detektionslicht eingekoppelten Primärlichts einer Lichtquelle durch den Kristall kann in erfindungsgemäßer Weise beispielsweise dadurch kompensiert werden, dass das Primärlicht, bevor es auf den Kristall trifft, zunächst in entgegengesetzter Richtung räumlich aufgespalten wird und diese räumliche Aufspaltung durch den Kristall wieder rückgängig gemacht wird.

In besonders vorteilhafter Weise kann das Mikroskop beispielsweise als Scanmikroskop, insbesondere als konfokales Scanmikroskop, ausgebildet sein.

Wie bereits erwähnt kann die erfindungsgemäße akustooptische Vorrichtung insbesondere als akustooptischer Hauptstrahlteiler für ein erfindungsgemäßes Mikroskop ausgebildet sein.

Insbesondere kann vorgesehen sein, dass die akustooptische Vorrichtung als AOTF (Acousto Optical Tunable Filter) ausgebildet ist und/oder wenigstens einen AOTF aufweist.

Die Ausgestaltung der akustooptische Vorrichtung, insbesondere die Ausrichtung des Kristalls, der Ausbreitungsrichtung der mechanischen Welle(n) und der Ausbreitungsrichtung des Detektionslichtbündels zueinander und auch die Ausrichtung der Ein- und Austrittsflächen zueinander und zur optischen Achse des Kristalls kann - insbesondere für eine Ausführung, bei der das abgespaltene Beleuchtungslicht die akustooptische Vorrichtung und/oder den Kristall als kollineares Beleuchtungslichtbündel verlässt - beispielsweise nach dem nachfolgend geschilderten, iterativen Verfahren entwickelt werden, wobei das Verfahren vorzugsweise nicht an Hand von realen Bauteilen, was allerdings auch möglich wäre, sondern in einer Computersimulation nachvollzogen wird, bis die einzelnen Parameter der Kristallform, der Ausrichtung der Flächen und des Kristallgitters, die Ausrichtung der Ausbreitungsrichtung der mechanischen Welle(n) und die Ausbreitungsrichtungen des Detektionslichtes und/oder des Beleuchtungslichtes den gewünschten Anforderungen entsprechen. Wenn in einer Computersimulation sämtliche relevante Parameter auf diese Weise ermittelt wurden, kann der Kristall anschließend in einem weiteren Schritt hergestellt werden.

Zunächst wird ein akustooptisches Bauteil mit einem bekannten, handelsüblichen Kristallschnitt und mit einer bekannten Ausrichtung so in den Strahlengang eines Mikroskops eingefügt, dass das Detektionslichtbündel unter einem Einfallswinkel von 90 Grad auf die Eintrittsfläche des Kristalls trifft. Anschließend wird der Kristall vorzugsweise in der Ebene, die durch das einfallende Detektionslichtbündel und die Ausbreitungsrichtung der mechanischen Welle aufgespannt ist, so weit gedreht und damit auch die Winkel zwischen der Ausbreitungsrichtung der mechanischen Welle und den Kristallachsen verändert, bis aus dem Detektionslichtbündel mit der mechanischen Welle(n) beide Linearpolarisationsanteile der Beleuchtungslichtwellenlänge(n) abgelenkt und dadurch aus dem Detektionslichtbündel entfernt werden.

Allerdings hat die Drehung in der Regel zur Folge, dass die Kollinearität des austretenden Detektionslichts verloren geht. Aus diesem Grund wird nun in einem nächsten Iterationsschritt - ohne den Kristall zu drehen - die Form des Kristalls derart geändert, dass die Eintrittsfläche wieder senkrecht zum auftreffenden Detektionslichtbündel steht. In einem weiteren Schritt wird die Austrittsfläche für das Detektionslicht - ohne Drehung des Kristalls, sondern durch Ändern der Kristallform - so ausgerichtet, dass das Detektionslicht den Kristall als kollineares Detektionslichtbündel verlässt.

Allerdings haben die Änderungen an der Kristallform in der Regel zur Folge, dass mit der mechanischen Welle nicht mehr jeweils beide Linearpolarisationsanteile der Beleuchtungslichtwellenlänge(n) abgelenkt und dadurch aus dem Detektionslichtbündel entfernt werden. Aus diesem Grund wird der Kristall nun wieder gedreht, bis diese Bedingung wieder erfüllt ist. Dann werden die bereits beschriebenen, weiteren Iterationsschritte wiederholt.

Es werden so viele Iterationszyklen durchgeführt, bis die Bedingung einer gleichzeitigen Ablenkung beider Linearpolarisationsanteile und die Bedingung eines kollinearen Lichtaustritts erfüllt sind. In der Regel konvergiert das Verfahren sehr schnell, so dass nach wenigen Iterationszyklen das Ziel erreicht ist.

Bei einer besonderen Ausführung wird beim Drehen des Kristalls jeweils darauf geachtet, dass in Bezug auf eine der Linearpolarisationsrichtungen des Detektionslichts das gesamte, in die erste Ordnung gebeugte Licht, das die Beleuchtungslichtwellenlängen aufweist, kollinear aus dem Kristall austritt. Eine solche Ausführung hat nicht nur den Vorteil, dass jeweils mit einer einzigen mechanischen Welle jeweils beide Anteile unterschiedlicher Linearpolarisation aus dem Detektionslichtbündel entfernt werden können, sondern dass zusätzlich auch über den Lichtweg der ersten Beugungsordnung, bei der die oben beschriebene Kollinearität besteht, mehrfarbiges Beleuchtungslicht kollinear auf den Beleuchtungslichtstrahlengang gebeugt werden kann.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein Ausführungsbeispiel eines erfindungsgemäßen Mikroskops und
- Fig. 2: ein Ausführungsbeispiel einer akustooptischen Vorrichtung eines erfindungsgemäßen Mikroskops.

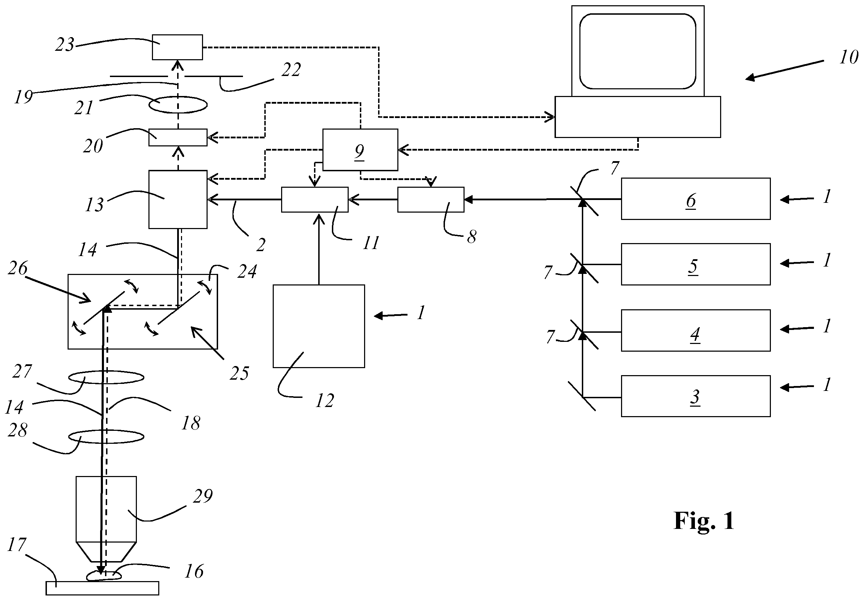

Fig. 1 zeigt ein als konfokales Scanmikroskop ausgebildetes Ausführungsbeispiel eines erfindungsgemäßen Mikroskops.

Das Mikroskop beinhaltet mehrere Lichtquellen 1, deren Licht zu einem kollinearen Primärlichtbündel 2 vereinigt wird. Konkret beinhaltet das Mikroskop einen Diodenlaser 3, einen, vorzugsweise diodengepumpten, Festkörperlaser 4 (DPSS-Laser; diode pumped solid state laser), einen Helium-Neon-Laser 5 und einen Argonionen-Laser 6, deren Emissionslichtbündel mit Hilfe von dichroitischen Strahlteilern 7 vereinigt werden. Die vereinigten Emissionslichtbündel gelangen anschließend zu einem AOTF 8 (acousto optical tunable filter), der es erlaubt, aus dem vereinigten Emissionslichtbündel Licht bestimmter Wellenlängen auszuwählen und weiter zu leiten. Hierzu wird der AOTF 8 mit elektromagnetischen Hochfrequenzwellen einer Hochfrequenzquelle 9 beaufschlagt, wobei der Benutzer durch Eingabe über einen PC 10 festlegen kann, welche Wellenlänge bzw. Welche Wellenlängen das weitergeleitete Licht aufweisen soll und wobei die Frequenz der Hochfrequenzquelle 9 automatisch von dem Mikroskop entsprechend eingestellt wird. Innerhalb des AOTF 8 werden mit Hilfe der elektromagnetischen Hochfrequenzwellen mechanische Wellen zum Beugen des gewünschten Lichtes erzeugt.

Das Mikroskop weist darüber hinaus einen akustooptischen Strahlvereiniger 11 auf, der einerseits das von dem AOTF 8 weitergeleitete Licht und andererseits das Licht einer Weißlichtquelle 12 empfängt.

Eine solche Weißlichtquelle 12 kann insbesondere ein spezielles optisches Element, wie beispielsweise ein mikrostrukturiertes optisches Element und/oder eine tapered Faser und/oder eine photonische Kristallfaser und/oder einen photonischen Kristall und/oder ein Photonic-Band-Gap-Material und/oder ein vergleichbares, optisches Nichtlinearitäten induzierendes Element, aufweisen, das einfallendes Primärlicht, insbesondere das Licht eines Pulslasers, spektral verbreitert. Eine solche Lichtquelle kann Primärlichts einer spektralen Breite von mehreren 10 nm, insbesondere von mehreren 100 nm, zur Verfügung stellen.

Der akustooptische Strahlvereiniger 11 ist ebenfalls mit elektromagnetischen Hochfrequenzwellen beaufschlagt, die von der Hochfrequenzquelle 9 bereitgestellt werden. Der akustooptische Strahlvereiniger 11 beinhaltet ein akustooptisches Element, in dem mit den elektromagnetischen Hochfrequenzwellen mechanische Wellen zum Ablenken oder Beugen von Lichtstrahlen derart erzeugbar sind, dass das von dem AOTF 8 weitergeleitete Licht und das Licht der Weißlichtquelle 12 den akustooptische Strahlvereiniger 11 als vereinigtes Primärlichtbündel kollinear zueinander verlassen.

Das Mikroskop beinhaltet außerdem eine akustooptische Vorrichtung 13, die als Hauptstrahlteiler fungiert. Insoweit hat die akustooptische Vorrichtung 13 einerseits die Aufgabe, Beleuchtungslicht 14 einer gewünschten Wellenlänge oder Beleuchtungslicht 14 mehrerer gewünschter Wellenlängen auf einen Beleuchtungslichtstrahlengang 15 zu lenken, und andererseits die Aufgabe, aus dem, von der beleuchteten Probe 16, die auf einem Objekttisch 17 angeordnet ist, ausgehenden, polychromatischen und kollinearen Detektionslichtbündel 18 (gestrichelt gezeichnet) die Anteile von an der Probe 16 gestreutem und/oder reflektiertem Beleuchtungslicht 14 zu entfernen.

Das von der akustooptischen Vorrichtung 13 auf den Beleuchtungsstrahlengang 15 gelenkte Beleuchtungslicht 14 gelangt zu einer Strahlablenkeinrichtung 24 die einen ersten Galvanometerspiegel 25 und einen zweiten Galvanometerspiegel 26 beinhaltet. Der übrige Teil des Primärlichtes 2 wird von der mechanischen Welle bzw. den mechanischen Wellen nicht beeinflusst und gelangt in Strahlfallen (nicht eingezeichnet).

Nach dem Verlassen der Strahlablenkeinrichtung 24 gelangt das Beleuchtungslicht 14 zur Scanlinse 27, dann zur Tubuslinse 28 und schließlich zu einem Objektiv 29, das das Beleuchtungslicht 14 auf bzw. in die Probe 16 fokussiert.

Die Strahlablenkeinrichtung 24 führt den Fokus des Beleuchtungslichts 14 vorzugsweise mäanderförmig über bzw. durch die Probe 16. Hierbei ist der Galvanometerspiegel 25 für die Ablenkung in X-Richtung zuständig, während der zweite Galvanometerspiegel 26 für die Ablenkung in Y-Richtung zuständig ist.

Auch die akustooptische Vorrichtung 13 ist mit wenigstens einer elektromagnetischen Hochfrequenzwelle beaufschlagt, um wenigstens eine mechanische Welle einer Frequenz zu erzeugen. Durch Ändern der Frequenz der elektromagnetischen Hochfrequenzwelle kann die Frequenz der mechanischen Welle geändert werden. Die Erzeugung der mechanischen Welle kann beispielsweise mit Hilfe eines Piezo-Schallerzeugers das erfolgen.

Ein Kristall (in dieser Figur nicht dargestellt) der akustooptischen Vorrichtung 13, in dem die mechanische Welle propagiert, und die Ausbreitungsrichtung der mechanischen Welle sind zu dem von der Probe 16 kommenden Detektionslichtbündel 18 derart ausgerichtet, dass die akustooptische Vorrichtung 13 mit der mechanischen Welle sowohl den die Beleuchtungswellenlänge und eine erste Linearpolarisationsrichtung aufweisenden Anteil des Detektionslichtbündels 18, als auch den die Beleuchtungswellenlänge und eine zweite, zur ersten Linearpolarisationsrichtung senkrechten Linearpolarisationsrichtung aufweisenden Anteil des Detektionslichtbündels 18 ablenkt und dadurch aus dem Detektionslichtbündel 18 entfernt. Der verbliebene Anteil 19 des Detektionslichtbündels 18 verlässt den Kristall kollinear und gelangt nach Passieren eines AONF 20 (acousto optical notch filters), einer Abbildungsoptik 21 und einer Detektionslochblende 22 zu einem Detektor 23, der vorzugsweise als Multibanddetektor ausgeführt ist. Die elektrischen Signale des Detektors 23 werden zur Weiterverarbeitung und Auswertung an den PC 10 übergeben.

Das Mikroskop ist derart ausgestaltet, dass nicht nur Licht einer Wellenlänge als Beleuchtungslicht 14 auf den Beleuchtungsstrahlengang 15 gelenkt werden kann und nicht lediglich Licht einer Wellenlänge aus dem von der Probe 16 kommenden Detektionslichtbündel 18 entfernt werden kann, sondern dass mehrere mechanische Wellen gleichzeitig zum Entfernen von Beleuchtungslicht mehrerer unterschiedlicher Wellenlängen - und beider Linearpolarisationsrichtungen - aus dem Detektionslicht und/oder zum Lenken von Beleuchtungslicht mehrerer unterschiedlicher Wellenlängen - und beider Linearpolarisationsrichtungen - auf den Beleuchtungsstrahlengang zum Einsatz kommen, wobei jedoch in vorteilhafter Weise pro Beleuchtungslichtwellenlänge in dem Kristall der akustooptischen Vorrichtung 13 lediglich eine einzige mechanische Welle erzeugt wird.

Die akustooptische Vorrichtung 13 wird für jede vom Benutzer gewünschte Beleuchtungslichtwellenlänge mit einer eigenen elektromagnetischen Hochfrequenzwelle beaufschlagt, die von der Hochfrequenzquelle 9 erzeugt wird. Der Vollständigkeit halber sei erwähnt, dass die unterschiedlichen Hochfrequenzwellen, die die Hochfrequenzquelle 9 für den AONF 20, den akustooptischen Strahlvereiniger 11, den AOTF 8 und für die akustooptische Vorrichtung 13 bereitstellt, in aller Regel unterschiedliche Frequenzen aufweisen. Es ist jedoch auch möglich die akustooptischen Bauteile derart auszubilden, dass zwei Hochfrequenzwellen derselben Frequenz für wenigstens von zwei akustooptischen Bauteile verwendet werden können.

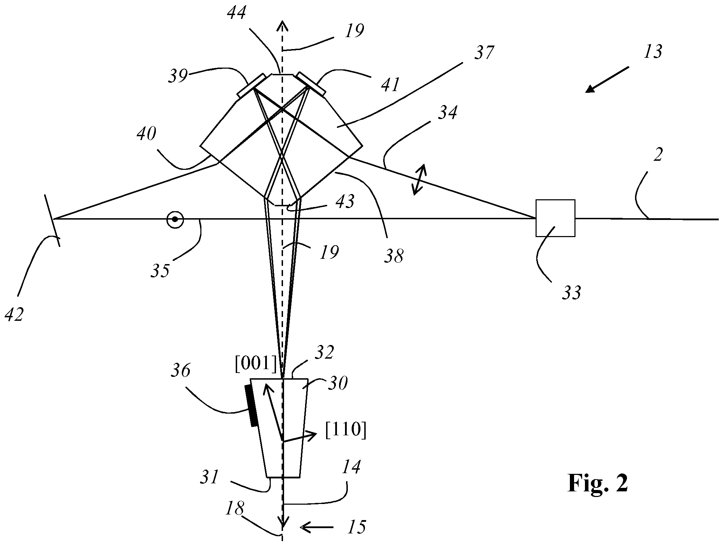

Fig. 2 zeigt schematisch ein Ausführungsbeispiel einer akustooptischen Vorrichtung 13 eines erfindungsgemäßen Mikroskops, die als Hauptstrahlteiler fungieren kann.

Die akustooptische Vorrichtung 13 beinhaltet einen Polarisationsstrahlteiler 33 der unpolarisiertes Primärlicht mehrerer Wellenlängen, insbesondere unpolarisiertes, breitbandiges Primärlicht 2, beispielsweise einer Weißlichtquelle, empfängt. Der Polarisationsstrahlteiler 33 spaltet das Primärlicht 2 in ein erstes Primärlichtbündel 34 und ein zweites Primärlichtbündel 35 räumlich auf, wobei das Licht der Primärlichtbündel 34, 35 zueinander senkrechte Linearpolarisationsrichtungen aufweist.

Die akustooptische Vorrichtung 13 beinhaltet einen Kristall 30 mit einer Eintrittsfläche 31 für das von einer Probe (hier nicht dargestellt) kommende Detektionslichtbündel 18 (gestrichelt eingezeichnet) und mit einer Austrittsfläche 32 für den verbliebenen Anteil 19 des Detektionslichtbündels 18, der letztlich zu einem Detektor (hier nicht eingezeichnet) geleitet wird. Die Austrittsfläche 32 für den verbliebenen Anteil 19 ist gleichzeitig die Eintrittsfläche zum Einkoppeln des ersten Primärlichtbündels 34 und des zweiten Primärlichtbündels 35 in den Kristall 30.

An dem Kristall 30 ist ein Piezo-Schallerzeuger 36 angeordnet, der mit einer elektromagnetischen Hochfrequenzwelle einer Frequenz oder mit mehreren elektromagnetischen Hochfrequenzwellen mehrerer Frequenzen zur Erzeugung einer mechanischen Welle bzw. mehrerer unterschiedlicher mechanischen Wellen beaufschlagt wird. Mit Hilfe der mechanischen Welle bzw. mit Hilfe der mehreren mechanischen Wellen können sowohl aus dem ersten Primärlichtbündel 34, als auch aus dem zweiten Primärlichtbündel 35 die Lichtanteile einer gewünschten Beleuchtungslichtwellenlänge bzw. die Lichtanteile mehrerer gewünschter Beleuchtungslichtwellenlängen durch Beugung abgelenkt und damit kollinear auf einen Beleuchtungsstrahlengang 15 gelenkt werden, wobei jeweils einer Frequenz der jeweiligen mechanischen Welle (insb. jeweils zur Erfüllung der Bragg-Bedingung) eine der Beleuchtungslichtwellenlängen - gleichzeitig für beide Linearpolarisationsrichtungen - zugeordnet ist.

Das Beleuchtungslicht 14 verlässt den Kristall 30 durch die Eintrittsfläche 31 für das Detektionslichtbündel 18, die somit gleichzeitig die Austrittsfläche für das Beleuchtungslicht 14 ist.

Gleichzeitig wird mit Hilfe der mechanischen Welle bzw. mit Hilfe der mechanischen Wellen aus dem Detektionslichtbündel 18 (gestrichelt gezeichnet) der Lichtanteil entfernt, der die Wellenlänge bzw. der die Wellenlängen des Beleuchtungslichts 14 aufweist, wobei der Kristall 30 und die Ausbreitungsrichtung der mechanischen Welle(n) zu dem von der Probe 16 kommenden Detektionslichtbündel 18 derart ausgerichtet sind, dass jede der mechanischen Wellen sowohl den die Beleuchtungswellenlänge und eine erste Linearpolarisationsrichtung aufweisenden Anteil des Detektionslichtbündels 18, als auch den die Beleuchtungswellenlänge und eine zweite, zur ersten Linearpolarisationsrichtung senkrechten Linearpolarisationsrichtung aufweisenden Anteil des Detektionslichtbündels 18 ablenkt und dadurch aus dem Detektionslichtbündel 18 entfernt. Der verbliebene Anteil 19 des Detektionslichtbündels 18 verlässt den Kristall 30 durch die Austrittsfläche 32 kollinear. In der Figur ist die Ausrichtung der Kristallstruktur durch Einzeichnung der Kristallachsen [001] und [110] schematisch angedeutet.

Das erste Primärlichtbündel 34 wird entgegengesetzt der Richtung der ersten Beugungsordnung des ordentlichen Lichtes (bezogen auf den gebeugten Anteil des Detektionslichtes) in den Kristall 30 eingekoppelt, während das zweite Primärlichtbündel 35 entgegengesetzt der Richtung der ersten Beugungsordnung des außerordentlichen Lichts (bezogen auf den gebeugten Anteil des Detektionslichtes) in den Kristall 30 eingekoppelt wird. Auf diese Weise steht das gesamte Primärlicht 2 zur Verfügung, um aus diesem Primärlicht 2 Beleuchtungslicht 14 einer bestimmten Wellenlänge oder bestimmter Wellenlängen mit Hilfe der akustooptischen Vorrichtung auf den Beleuchtungslichtstrahlengang des Mikroskops und damit zur Probe zu lenken, wobei für jede Wellenlänge lediglich eine einzige mechanische Welle einer einzigen Frequenz benötigt wird.

Um eine Kollinearität des aus dem Kristall 30 austretenden Beleuchtungslichtbündels 14 zu erreichen, ist dem Kristall 30 ein dispersives optisches Bauteil 37 vorgeschaltet, das das erste Primärlichtbündel 34 und das zweite Primärlichtbündel 35 räumlich spektral aufspaltet, wobei das Ausmaß der räumlichen Aufspaltung (insbesondere durch Auswahl der Winkel und/oder der optischen Weglängen) derart festgelegt ist, dass sie von dem Kristall 30 wieder rückgängig gemacht wird.

Das dispersive optische Bauteil 37 weist ein Ein- und Auskoppelfenster 38 für das erste Primärlichtbündel 34 auf. Zunächst tritt das erste Primärlichtbündel 34 durch das Ein- und Auskoppelfenster 38 in das dispersive optische Bauteil 37 ein und wird nach Durchlaufen des dispersiven optischen Bauteils 37 von einem ersten Spiegel 39, der an einer dem Ein- und Auskoppelfenster 38 gegenüberliegenden Fläche angebracht ist, reflektiert, bevor das erste Primärlichtbündel 34 räumlich und spektral aufgespalten das dispersive optische Bauteil 37 durch das Ein- und Auskoppelfenster 38 wieder verlässt.

Analog weist das dispersive optische Bauteil 37 ein weiteres Ein- und Auskoppelfenster 40 für das von einem um Umlenkspiegel 42 umgelenkte zweite Primärlichtbündel 35 auf. Zunächst tritt das zweite Primärlichtbündel 35 durch das weitere Ein- und Auskoppelfenster 40 in das dispersive optische Bauteil 37 ein und wird nach Durchlaufen des dispersiven optischen Bauteils 37 von einem zweiten Spiegel 41, der an einer dem weiteren Ein- und Auskoppelfenster 40 gegenüberliegenden Fläche angebracht ist, reflektiert, bevor das zweite Primärlichtbündel 35 räumlich und spektral aufgespalten das dispersive optische Bauteil 37 durch das weitere Ein- und Auskoppelfenster 40 wieder verlässt.

Das dispersive optische Bauteil 37 weist außerdem eine Einkoppelfläche 43 und eine dazu parallele Auskoppelfläche 44 für den verbliebenen Anteil 19 des Detektionslichtbündels 18 auf. Der verbliebene Anteil 19 des Detektionslichtbündels 18 tritt lotrecht sowohl durch die Einkoppelfläche 43 und die parallele Auskoppelfläche 44 und erfährt daher keine spektrale Aufspaltung.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

## Patentansprüche

1. Scanmikroskop zur Beobachtung von von einer Probe emittiertem Fluoreszenzlicht mit einer akustooptischen Vorrichtung (13), die mit einer mechanischen Welle, die durch eine, vorzugsweise einstellbare, Frequenz charakterisiert ist, aus einem polychromatischen und kollinearen Detektionslichtbündel (18) Anteile von an einer Probe (16) gestreutem und/oder reflektiertem Beleuchtungslicht (14) einer der Frequenz zugeordneten Beleuchtungslichtwellenlänge entfernt, wobei die akustooptische Vorrichtung (13) einen Kristall (30) mit einer Eintrittsfläche (31) und einer gegenüber liegenden Austrittsfläche (32) für das Detektionslichtbündel (18) enthält,
**dadurch gekennzeichnet, dass** der Kristall (30) der akustooptischen Vorrichtung (13), in dem die mechanische Welle propagiert, und die Ausbreitungsrichtung der mechanischen Welle relativ zueinander und relativ zu dem in den Kristall (30) einfallenden Detektionslichtbündel (18) derart ausgerichtet sind, dass die akustooptische Vorrichtung (13) mit der mechanischen Welle sowohl den die Beleuchtungswellenlänge und eine erste Linearpolarisationsrichtung aufweisenden Anteil des Detektionslichtbündels (18), als auch den die Beleuchtungswellenlänge und eine zweite, zur ersten Linearpolarisationsrichtung senkrechten Linearpolarisationsrichtung aufweisenden Anteil des Detektionslichtbündels (18) ablenkt und dadurch aus dem Detektionslichtbündel (18) entfernt, und dass der verbleibende Anteil des Detektionslichtbündels (18) den Kristall (30) durch die Austrittsfläche (32) kollinear verlässt.

2. Scanmikroskop nach Anspruch 1, **dadurch gekennzeichnet, dass**
a. die erste Linearpolarisationsrichtung die Linearpolarisationsrichtung des ordentlichen Lichtes bezogen auf eine Doppelbrechungseigenschaft des Kristalles (30) ist und/oder dass
b. die zweite Linearpolarisationsrichtung die Linearpolarisationsrichtung des außerordentlichen Lichtes bezogen auf eine Doppelbrechungseigenschaft des Kristalles (30) ist und/oder dass
c. die erste oder die zweite Linearpolarisationsrichtung in der Ebene angeordnet ist, die von der Ausbreitungsrichtung der mechanischen Welle und der Ausbreitungsrichtung des Detektionslichtbündels (18) aufgespannt ist.

3. Scanmikroskop nach Anspruch 1 oder 2, **dadurch gekennzeichnet, dass** der verbliebene Teil des Detektionslichtbündels (18) den Kristall (30) kollinear verlässt.

4. Scanmikroskop nach einem der Ansprüche 1 bis 3, **dadurch gekennzeichnet, dass** die akustooptische Vorrichtung (13) mit der mechanischen Welle aus wenigstens einem polychromatischen und vorzugsweise kollinearen Primärlichtbündel (34, 35) wenigstens einer Lichtquelle Beleuchtungslicht (14) einer der Frequenz der mechanischen Welle zugeordneten Beleuchtungslichtwellenlänge abspaltet und zur Beleuchtung einer Probe (16) auf einen Beleuchtungsstrahlengang (15) lenkt.

5. Scanmikroskop nach einem der Ansprüche 1 bis 4, **dadurch gekennzeichnet, dass** die akustooptische Vorrichtung (13) mit der mechanischen Welle sowohl aus einem ersten polychromatischen und vorzugsweise kollinearen Primärlichtbündel (34) wenigstens einer Lichtquelle (3, 4, 5, 6) mit einer ersten Linearpolarisationsrichtung, als auch aus einem zweiten polychromatischen und vorzugsweise kollinearen Primärlichtbündel (35) wenigstens einer Lichtquelle (3, 4, 5, 6) mit einer zweiten, von der ersten Linearpolarisationsrichtung verschiedenen Linearpolarisationsrichtung jeweils Beleuchtungslicht (14) der der Frequenz der mechanischen Welle zugeordneten Beleuchtungslichtwellenlänge abspaltet und zur Beleuchtung einer Probe (16) auf einen Beleuchtungsstrahlengang (15) lenkt.

6. Scanmikroskop nach einem der Ansprüche 1 bis 5, **dadurch gekennzeichnet, dass** die akustooptische Vorrichtung (13) mit mehreren mechanischen Wellen, die jeweils durch unterschiedliche Frequenzen charakterisiert sind, aus dem Detektionslichtbündel (18) Anteile von an einer Probe (16) gestreutem und/oder reflektiertem Beleuchtungslicht (14) mehrerer Beleuchtungslichtwellenlängen entfernt, wobei jeder Frequenz eine der Beleuchtungslichtwellenlängen zugeordnet ist und wobei jede der mechanischen Wellen jeweils sowohl den die ihrer Frequenz zugeordnete Beleuchtungswellenlänge aufweisenden Anteil mit einer ersten Linearpolarisationsrichtung, also auch den Anteil mit einer zweiten, zur ersten Linearpolarisationsrichtung senkrechten Linearpolarisationsrichtung ablenkt und dadurch aus dem Detektionslichtbündel (18) entfernt.

7. Scanmikroskop nach Anspruch 6, **dadurch gekennzeichnet, dass** die mechanischen Wellen dieselbe Ausbreitungsrichtung aufweisen und/oder von demselben Schallerzeuger (36) erzeugt sind.

8. Scanmikroskop nach Anspruch 6 oder 7, **dadurch gekennzeichnet, dass** die akustooptische Vorrichtung (13) mit den mehreren mechanischen Wellen aus polychromatischem Primärlicht wenigstens einer Lichtquelle Beleuchtungslicht (14) mehrerer Beleuchtungslichtwellenlängen abspaltet und zur Beleuchtung einer Probe (16) auf einen Beleuchtungsstrahlengang (15) lenkt.

9. Scanmikroskop nach einem der Ansprüche 6 bis 8, **dadurch gekennzeichnet, dass** die akustooptische Vorrichtung (13) mit den mehreren mechanischen Wellen, aus einem polychromatischen und vorzugsweise kollinearen Primärlichtbündel (34, 35) Beleuchtungslicht (14) mehrerer Beleuchtungslichtwellenlängen zur Beleuchtung der Probe (16) abspaltet und zur Beleuchtung einer Probe (16) auf einen Beleuchtungsstrahlengang (15) lenkt.

10. Scanmikroskop nach einem der Ansprüche 6 bis 9, **dadurch gekennzeichnet, dass** die akustooptische Vorrichtung (13) mit den mehreren mechanischen Wellen jeweils sowohl aus einem ersten polychromatischen und vorzugsweise kollinearen Primärlichtbündel (34) wenigstens einer Lichtquelle (3, 4, 5, 6) mit einer ersten Linearpolarisationsrichtung, als auch aus einem zweiten polychromatischen und vorzugsweise kollinearen Primärlichtbündel (35) wenigstens einer Lichtquelle (3, 4, 5, 6) mit einer zweiten, zur ersten Linearpolarisationsrichtung senkrechten Linearpolarisationsrichtung jeweils Beleuchtungslicht (14) mehrerer Wellenlängen abspaltet und zur Beleuchtung einer Probe (16) auf einen Beleuchtungsstrahlengang (15) lenkt, wobei jeweils der Frequenz der jeweiligen mechanischen Welle einer der Beleuchtungslichtwellenlängen zugeordnet ist.

11. Scanmikroskop nach einem der Ansprüche 4 bis 10, **dadurch gekennzeichnet, dass**
a. das erste Primärlichtbündel (34) und das zweite Primärlichtbündel (35) unterschiedliche Polarisationsrichtungen aufweisen und/oder dass
b. das erste Primärlichtbündel (34) und das zweite Primärlichtbündel (35) durch räumliche Aufspaltung eines Primärlichtbündels entstanden sind und/oder dass
c. das erste Primärlichtbündel (34) und das zweite Primärlichtbündel (35) durch räumliche Aufspaltung eines Primär- Primärlichtbündels mit einem Polarisationsstrahlteiler entstanden sind und/oder dass
d. das erste Primärlichtbündel und das zweite Primärlichtbündel durch räumliche Aufspaltung eines unpolarisierten Primär- Primärlichtbündels (2) mit einem Polarisationsstrahlteiler (33) entstanden sind.

12. Scanmikroskop nach einem der Ansprüche 4 bis 11, **dadurch gekennzeichnet, dass** das abgespaltene Beleuchtungslicht (14) die akustooptische Vorrichtung (13) und/oder den Kristall (30) als kollineares Beleuchtungslichtbündel (14) verlässt.

13. Scanmikroskop nach einem der Ansprüche 1 bis 12, **dadurch gekennzeichnet, dass**
a. der Kristall (30) eine Eintrittsfläche (31) für das Detektionslicht aufweist, durch die das Detektionslicht mit einem Einfallswinkel von Null Grad einfällt und dass
b. der Kristall (30) eine Austrittsfläche (32) für das Detektionslicht aufweist, durch die das Detektionslicht den Kristall (30) mit einem Ausfallswinkel von Null Grad verlässt.

14. Scanmikroskop nach einem der Ansprüche 1 bis 13, **dadurch gekennzeichnet, dass**
a. der Kristall (30) wenigstens eine Eintrittsfläche (32) für das Primärlicht wenigstens einer Lichtquelle (3, 4, 5, 6) aufweist und/oder dass
b. der Kristall (30) wenigstens eine Eintrittsfläche (32) für das Primärlicht wenigstens einer Lichtquelle (3, 4, 5, 6) aufweist, das gleichzeitig die Austrittsfläche (32) für das Detektionslicht ist.
c. der Kristall (30) eine Austrittsfläche (31) für das Beleuchtungslicht (14) aufweist, die gleichzeitig die Eintrittsfläche (31) für das Detektionslicht ist und/oder dass
d. der Kristall (30) eine Eintrittsfläche (32) für Primärlicht wenigstens einer Lichtquelle (3, 4, 5, 6) und eine Austrittsfläche (31) für das abgespaltene Beleuchtungslicht (14) aufweist, die derart zueinander ausgerichtet sind, dass das mit der mechanischen Welle abgelenkte Beleuchtungslicht (14) mit einem Einfallswinkel von Null Grad auf die Austrittsfläche (31) trifft und/oder dass
e. der Kristall (30) eine Eintrittsfläche (32) für Primärlicht wenigstens einer Lichtquelle (3, 4, 5, 6) und eine Austrittsfläche (32) für das abgespaltene Beleuchtungslicht (14) aufweist, die derart zueinander ausgerichtet sind, dass das Primärlicht als kollineares Primärlichtbündel in den Kristall (30) einkoppelbar ist und das mit der mechanischen Welle abgelenkte Beleuchtungslicht (14) den Kristall (30) als kollineares Beleuchtungslichtbündel verlässt.

15. Scanmikroskop nach einem der Ansprüche 1 bis 14, **dadurch gekennzeichnet, dass**
a. die akustooptische Vorrichtung (13) wenigstens ein dispersives optisches Bauteil (37) aufweist, das eine (wenigstens teilweise) von dem Kristall (30) hervorgerufene räumliche Farbaufspaltung des Primärlichtes (2) und/oder des Beleuchtungslichtes (14) und/oder des Detektionslichtes (18) kompensiert und/oder dass
b. die akustooptische Vorrichtung (13) wenigstens ein dispersives optisches Bauteil (37) aufweist, das eine (wenigstens teilweise) von dem Kristall (30) hervorgerufene räumliche Farbaufspaltung des Primärlichtes (2) und/oder des Beleuchtungslichtes (14) und/oder des Detektionslichtes (18) kompensiert und das mehrere Eintrittsflächen (38, 40) aufweist und/oder dass
c. die akustooptische Vorrichtung (13) wenigstens ein dispersives optisches Bauteil aufweist (37) , das eine (wenigstens teilweise) von dem Kristall (30) hervorgerufene räumliche Farbaufspaltung des Primärlichtes (2) und/oder des Beleuchtungslichtes (14) und/oder des Detektionslichtes (18) kompensiert und eine erste Eintrittsfläche (38) für Licht mit einer ersten Linearpolarisationsrichtung und eine zweite Eintrittsfläche (40) für Licht mit einer zweiten, zur ersten Linearpolarisationsrichtung senkrechten Linearpolarisationsrichtung aufweist.

16. Scanmikroskop nach einem der Ansprüche 1 bis 15, **dadurch gekennzeichnet, dass** das Scanmikroskop ein konfokales Scanmikroskop ist.

## Claims

1. A scanning microscope for observing fluorescent light, emitted by a sample, with an acousto-optical device (13), which removes, with a mechanical wave, which is **characterized by** a, preferably adjustable, frequency, from a polychromatic and collinear detection light beam (18), portions of illumination light (14), scattered and/or reflected from a sample (16), of an illumination light wavelength, associated with the frequency, wherein the acousto-optical device (13) contains a crystal (30) with an entrance surface (31) and an opposite exit surface (32) for the detection light beam (18),
**characterized in that** the crystal (30) of the acousto-optical device (13), in which the mechanical wave propagates, and the propagation direction of the mechanical wave are aligned relative to each other and relative to the detection light beam (18), incident into the crystal (30), such that the acousto-optical device (13) with the mechanical wave deflects both the portion of the detection light beam (18) having the illumination wavelength and a first linear polarization direction, as well as the portion of the detection light beam (18) having the illumination wavelength and a second linear polarization direction perpendicular to the first linear polarization direction, and thereby removes them from the detection light beam (18), and that the remaining portion of the detection light beam (18) leaves the crystal (30) collinearly through the exit surface (32).

2. The scanning microscope according to claim 1, **characterized in that**
a. the first linear polarization direction is the linear polarization direction of the ordinary light, related to a birefringence property of the crystal (30) and/or that
b. the second linear polarization direction is the linear polarization direction of the extraordinary light, related to a birefringence property of the crystal (30) and/or that
c. the first or the second linear polarization direction is arranged in the plane, spanned by the propagation direction of the mechanical wave and the propagation direction of the detection light beam (18).

3. The scanning microscope according to claim 1 or 2, **characterized in that** the remaining part of the detection light beam (18) leaves the crystal (30) collinearly.

4. The scanning microscope according to any one of claims 1 to 3, **characterized in that** the acousto-optical device (13) with the mechanical wave splits off illumination light (14) of an illumination light wavelength, associated with the frequency of the mechanical wave, from at least one polychromatic and preferably collinear primary light beam (34, 35) of at least one light source and directs it into an illumination beam path (15) for illuminating a sample (16).

5. The scanning microscope according to any one of claims 1 to 4, **characterized in that** the acousto-optical device (13) with the mechanical wave splits of both from a first polychromatic and preferably collinear primary light beam (34) of at least one light source (3, 4, 5, 6) with a first linear polarization direction, and from a second polychromatic and preferably collinear primary light beam (35) of at least one light source (3, 4, 5, 6) with a second linear polarization direction different from the first linear polarization direction, each illumination light (14) of the illumination light wavelength, assigned to the frequency of the mechanical wave, and directs it into an illumination beam path (15) for illuminating a sample (16).

6. The scanning microscope according to any one of claims 1 to 5, **characterized in that** the acousto-optical device (13) with several mechanical waves, each **characterized by** different frequencies, removes portions of illumination light (14) of several illumination light wavelengths, scattered and/or reflected from a sample (16) from the detection light beam (18), wherein each frequency is assigned one of the illumination light wavelengths and wherein each of the mechanical waves deflects both the portion having the illumination wavelength, assigned to its frequency, with a first linear polarization direction and also the portion with a second linear polarization direction perpendicular to the first linear polarization direction and thereby removes it from the detection light beam (18).

7. The scanning microscope according to claim 6, **characterized in that** the mechanical waves have the same propagation direction and/or are generated by the same sound generator (36).

8. The scanning microscope according to claim 6 or 7, **characterized in that** the acousto-optical device (13) with the plurality of mechanical waves splits off illumination light (14) of several illumination light wavelengths from polychromatic primary light of at least one light source, and directs it into an illumination beam path (15) for illuminating a sample (16).

9. The scanning microscope according to any one of claims 6 to 8, **characterized in that** the acousto-optical device (13) with the plurality of mechanical waves splits off illumination light (14) of several illumination light wavelengths from a polychromatic and preferably collinear primary light beam (34, 35) for illuminating the sample (16) and directs it into an illumination beam path (15) for illuminating a sample (16).

10. The scanning microscope according to any one of claims 6 to 9, **characterized in that** the acousto-optical device (13) with the plurality of mechanical waves splits of, from a first polychromatic and preferably collinear primary light beam (34) of at least one light source (3, 4, 5, 6) with a first linear polarization direction, as well as from a second polychromatic and preferably collinear primary light beam (35) of at least one light source (3, 4, 5, 6) with a second linear polarization direction perpendicular to the first linear polarization direction, respective illumination light (14) of several wavelengths and directs it into an illumination beam path (15) for illuminating a sample (16), wherein each of the illuminating light wavelengths is assigned to the frequency of the respective mechanical wave.

11. The scanning microscope according to any one of claims 4 to 10, **characterized in that**
a. the first primary light beam (34) and the second primary light beam (35) have different polarization directions and/or that
b. the first primary light beam (34) and the second primary light beam (35) are created by spatial splitting off a primary light beam and/or that
c. the first primary light beam (34) and the second primary light beam (35) are created by spatially splitting off a primary-primary light beam with a polarization beam splitter and/or that
d. the first primary light beam and the second primary light beam are created by spatially splitting off an unpolarized primary light beam (2) with a polarization beam splitter (33).

12. The scanning microscope according to any one of claims 4 to 11, **characterized in that** the splitt-off illumination light (14) leaves the acousto-optical device (13) and/or the crystal (30) as a collinear illumination light beam (14).

13. The scanning microscope according to any one of claims 1 to 12, **characterized in that**
a. the crystal (30) has an entrance surface (31) for the detection light, through which the detection light enters at an angle of incidence of zero degrees and that
b. the crystal (30) has an exit surface (32) for the detection light, through which the detection light leaves the crystal (30) with an angle of emergence of zero degrees.

14. The scanning microscope according to any one of claims 1 to 13, **characterized in that**
a. the crystal (30) has at least one entrance surface (32) for the primary light of at least one light source (3, 4, 5, 6) and/or that
b. the crystal (30) has at least one entrance surface (32) for the primary light of at least one light source (3, 4, 5, 6), which is simultaneously the exit surface (32) for the detection light.
c. the crystal (30) has an exit surface (31) for the illumination light (14), which is simultaneously the entrance surface (31) for the detection light and/or that
d. the crystal (30) has an entrance surface (32) for primary light from at least one light source (3, 4, 5, 6) and an exit surface (31) for the split-off illumination light (14), which are aligned with one another in such a way that the illumination light (14), deflected by the mechanical wave, strikes the exit surface (31) at an angle of incidence of zero degrees and/or that
e. the crystal (30) has an entrance surface (32) for primary light from at least one light source (3, 4, 5, 6) and an exit surface (32) for the split-off illumination light (14), which are aligned with each other in such a way that the primary light can be coupled into the crystal (30) as a collinear primary light beam and the illumination light (14), deflected by the mechanical wave, leaves the crystal (30) as a collinear illumination light beam.

15. The scanning microscope according to any one of claims 1 to 14, **characterized in that**
a. the acousto-optical device (13) has at least one dispersive optical component (37) which compensates for a spatial colour splitting of the primary light (2) and/or the illumination light (14) and/or the detection light (18) caused (at least partially) by the crystal (30) and/or that
b. the acousto-optical device (13) has at least one dispersive optical component (37) which compensates for a spatial colour splitting of the primary light (2) and/or the illumination light (14) and/or the detection light (18) caused (at least partially) by the crystal (30) and which has a plurality of entry surfaces (38, 40) and/or that
c. the acousto-optical device (13) has at least one dispersive optical component (37) which produces a spatial colour splitting of the primary light (2) caused (at least partially) by the crystal (30) and/or of the illumination light (14) and/or the detection light (18) and has a first entrance surface (38) for light with a first linear polarization direction and a second entrance surface (40) for light with a second linear polarization direction, perpendicular to the first linear polarization direction.

16. The scanning microscope according to any one of claims 1 to 15, **characterized in that** the scanning microscope is a confocal scanning microscope.

## Revendications

1. Microscope à balayage pour l'observation de la lumière fluorescente émise par un échantillon avec un dispositif acousto-optique (13), qui éloigne, avec une onde mécanique qui est **caractérisée par** une fréquence, de préférence réglable, d'un faisceau lumineux de détection polychromatique et colinéaire (18), des fractions de lumière d'éclairage (14) diffusée et/ou réfléchie au niveau d'un échantillon (16) d'une longueur d'onde lumineuse d'éclairage associée à la fréquence, dans lequel le dispositif acousto-optique (13) contient un cristal (30) avec une surface d'entrée (31) et une surface de sortie (32) opposée pour le faisceau lumineux de détection (18), **caractérisé en ce que** le cristal (30) du dispositif acousto-optique (13), dans lequel l'onde mécanique se propage, et le sens de propagation de l'onde mécanique sont orientés l'un par rapport à l'autre et par rapport au faisceau lumineux de détection (18) pénétrant dans le cristal (30) de manière à ce que le dispositif acousto-optique (13) dévie avec l'onde mécanique non seulement la fraction du faisceau lumineux de détection (18) présentant la longueur d'onde d'éclairage et un premier sens de polarisation linéaire mais aussi la fraction du faisceau lumineux de détection (18) présentant la longueur d'onde d'éclairage et un second sens de polarisation linéaire perpendiculaire au premier sens de polarisation linéaire et l'éloigne ainsi du faisceau lumineux de détection (18), et que la fraction restante du faisceau lumineux de détection (18) quitte le cristal (30) de manière colinéaire par la surface de sortie (32).

2. Microscope à balayage selon la revendication 1, **caractérisé en ce que**
a. le premier sens de polarisation linéaire est le sens de polarisation linéaire de la lumière ordinaire par rapport à une propriété de double réfraction du cristal (30) et/ou **en ce que**
b. le second sens de polarisation linéaire est le sens de polarisation linéaire de la lumière extraordinaire par rapport à une propriété de double réfraction du cristal (30) et/ou **en ce que**
c. le premier ou le second sens de polarisation linéaire est disposé dans le plan qui est défini par le sens de propagation de l'onde mécanique et le sens de propagation du faisceau lumineux de détection (18).

3. Microscope à balayage selon la revendication 1 ou la revendication 2, **caractérisé en ce que** la partie restante du faisceau lumineux de détection (18) quitte le cristal (30) de manière colinéaire.

4. Microscope à balayage selon l'une quelconque des revendications 1 à 3, **caractérisé en ce que**
le dispositif acousto-optique (13) sépare avec l'onde mécanique d'au moins un faisceau lumineux primaire (34, 35) polychromatique et de préférence colinéaire au moins d'une source lumineuse, de la lumière d'éclairage (14) d'une longueur d'onde lumineuse d'éclairage attribuée à la fréquence de l'onde mécanique et la dirige sur un trajet de faisceau d'éclairage (15) pour l'éclairage d'un échantillon (16).

5. Microscope à balayage selon l'une quelconque des revendications 1 à 4, **caractérisé en ce que** le dispositif acousto-optique (13) sépare avec l'onde mécanique non seulement d'un premier faisceau lumineux primaire (34) polychromatique et de préférence colinéaire d'au moins une source lumineuse (3, 4, 5, 6) avec un premier sens de polarisation linéaire, mais aussi d'un second faisceau lumineux primaire (35) polychromatique et de préférence colinéaire d'au moins une source lumineuse (3, 4, 5, 6) avec un second sens de polarisation linéaire différent du premier sens de polarisation linéaire, respectivement de la lumière d'éclairage (14) de la longueur d'onde lumineuse d'éclairage attribuée à la fréquence de l'onde mécanique et la dirige sur un trajet de faisceau d'éclairage (15) pour l'éclairage d'un échantillon (16).

6. Microscope à balayage selon l'une quelconque des revendications 1 à 5, **caractérisé en ce que** le dispositif acousto-optique (13) éloigne avec plusieurs ondes mécaniques qui sont chacune **caractérisées par** des fréquences différentes, du faisceau lumineux de détection (18), des fractions de lumière d'éclairage (14) diffusée et/ou réfléchie au niveau d'un échantillon (16) de plusieurs longueurs d'onde lumineuse d'éclairage, dans lequel une des longueurs d'onde lumineuse d'éclairage est attribuée à chaque fréquence et dans lequel chacune des ondes mécaniques dévie respectivement non seulement la longueur d'onde lumineuse attribuée à sa fréquence avec un premier sens de polarisation linéaire, donc aussi la fraction avec un second sens de polarisation linéaire, perpendiculaire au premier sens de polarisation linéaire, et l'éloigne ainsi du faisceau lumineux de détection (18).

7. Microscope à balayage selon la revendication 6, **caractérisé en ce que** les ondes mécaniques présentent le même sens de propagation et/ou sont générées par le même générateur de sons (36).

8. Microscope à balayage selon la revendication 6 ou la revendication 7, **caractérisé en ce que** le dispositif acousto-optique (13) sépare avec les plusieurs ondes mécaniques de lumière primaire polychromatique au moins d'une source lumineuse, de la lumière d'éclairage (14) de plusieurs longueurs d'onde lumineuse d'éclairage et la dirige sur un trajet de faisceau d'éclairage (15) pour l'éclairage d'un échantillon (16).

9. Microscope à balayage selon l'une quelconque des revendications 6 à 8, **caractérisé en ce que** le dispositif acousto-optique (13) sépare avec les plusieurs ondes mécaniques d'un faisceau de lumière primaire (34, 35) polychromatique et de préférence colinéaire, de la lumière d'éclairage (14) de plusieurs longueurs d'onde lumineuse d'éclairage pour l'éclairage de l'échantillon (16) et la dirige sur un trajet de faisceau d'éclairage (15) pour l'éclairage d'un échantillon (16).

10. Microscope à balayage selon l'une quelconque des revendications 6 à 9, **caractérisé en ce que** le dispositif acousto-optique (13) sépare avec les plusieurs ondes mécaniques respectivement non seulement d'un premier faisceau lumineux primaire (34) polychromatique et de préférence colinéaire d'au moins une source lumineuse (3, 4, 5, 6) avec un premier sens de polarisation linéaire, mais aussi d'un second faisceau lumineux primaire (35) polychromatique et de préférence colinéaire d'au moins une source lumineuse (3, 4, 5, 6) avec un second sens de polarisation linéaire perpendiculaire au premier sens de polarisation linéaire, respectivement de la lumière d'éclairage (14) de plusieurs longueurs d'onde et la dirige sur un trajet de faisceau d'éclairage (15) pour l'éclairage d'un échantillon (16), dans lequel l'une des longueurs d'onde lumineuse d'éclairage est attribuée respectivement à la fréquence de l'onde mécanique respective.

11. Microscope à balayage selon l'une quelconque des revendications 4 à 10, **caractérisé en ce que**
a. le premier faisceau lumineux primaire (34) et le second faisceau lumineux primaire (35) présentent des sens de polarisation différents et/ou **en ce que**
b. le premier faisceau lumineux primaire (34) et le second faisceau lumineux primaire (35) sont formés par division spatiale d'un faisceau lumineux primaire et/ou **en ce que**
c. le premier faisceau lumineux primaire (34) et le second faisceau lumineux primaire (35) sont formés par division spatiale d'un faisceau lumineux primaire primaire avec un séparateur de faisceau de polarisation et/ou **en ce que**
d. le premier faisceau lumineux primaire et le second faisceau lumineux primaire sont formés par division spatiale d'un faisceau lumineux primaire primaire non polarisé (2) avec un séparateur de faisceau de polarisation (33).

12. Microscope à balayage selon l'une quelconque des revendications 4 à 11, **caractérisé en ce que** la lumière d'éclairage séparée (14) quitte le dispositif acousto-optique (13) et/ou le cristal (30) sous forme de faisceau d'éclairage colinéaire (14).

13. Microscope à balayage selon l'une quelconque des revendications 1 à 12, **caractérisé en ce que**
a. le cristal (30) présente une surface d'entrée (31) pour la lumière de détection, par laquelle la lumière de détection entre avec un angle d'incidence de zéro degré et **en ce que**
b. le cristal (30) présente une surface de sortie (32) pour la lumière de détection, par laquelle la lumière de détection quitte le cristal (30) avec un angle de réflexion de zéro degré.

14. Microscope à balayage selon l'une quelconque des revendications 1 à 13, **caractérisé en ce que**
a. le cristal (30) présente au moins une surface d'entrée (32) pour la lumière primaire au moins d'une source lumineuse (3, 4, 5, 6) et/ou **en ce que**
b. le cristal (30) présente au moins une surface d'entrée (32) pour la lumière primaire au moins d'une source lumineuse (3, 4, 5, 6) qui est simultanément la surface de sortie (32) pour la lumière de détection.
c. le cristal (30) présente une surface de sortie (31) pour la lumière d'éclairage (14) qui est simultanément la surface d'entrée (31) pour la lumière de détection et/ou **en ce que**
d. le cristal (30) présente une surface d'entrée (32) pour la lumière primaire au moins d'une source lumineuse (3, 4, 5, 6) et une surface de sortie (31) pour la lumière d'éclairage divisée (14) qui sont orientées l'une par rapport à l'autre de sorte que la lumière d'éclairage (14) déviée avec l'onde mécanique rencontre la surface de sortie (31) avec un angle d'incidence de zéro degré et/ou **en ce que**
e. le cristal (30) présente une surface d'entrée (32) pour la lumière primaire au moins d'une source lumineuse (3, 4, 5, 6) et une surface de sortie (32) pour la lumière d'éclairage divisée (14), qui sont orientées l'une par rapport à l'autre de telle manière que la lumière primaire puisse être introduite en tant que faisceau de lumière primaire colinéaire dans le cristal (30) et que la lumière d'éclairage (14) déviée avec l'onde mécanique quitte le cristal (30) en tant que faisceau de lumière d'éclairage colinéaire.

15. Microscope à balayage selon l'une quelconque des revendications 1 à 14, **caractérisé en ce que**
a. le dispositif acousto-optique (13) présente au moins un composant optique dispersif (37) qui compense une séparation de couleur spatiale (au moins partielle) provoquée par le cristal (30) de la lumière primaire (2) et/ou de la lumière d'éclairage (14) et/ou de la lumière de détection (18) et/ou **en ce que**
b. le dispositif acousto-optique (13) présente au moins un composant optique dispersif (37) qui compense une séparation de couleur spatiale provoquée (au moins partiellement) par le cristal (30) de la lumière primaire (2) et/ou de la lumière d'éclairage (14) et/ou de la lumière de détection (18) et qui présente plusieurs surfaces d'entrée (38, 40) et/ou **en ce que**
c. le dispositif acousto-optique (13) présente au moins un composant optique dispersif (37), qui compense une séparation de couleur spatiale provoquée (au moins partiellement) par le cristal (30) de la lumière primaire (2) et/ou de la lumière d'éclairage (14) et/ou de la lumière de détection (18) et présente une première surface d'entrée (38) pour la lumière avec un premier sens de polarisation linéaire et une seconde surface d'entrée (40) pour la lumière avec un second sens de polarisation linéaire perpendiculaire au premier sens de polarisation linéaire.

16. Microscope à balayage selon l'une quelconque des revendications 1 à 15, **caractérisé en ce que** le microscope à balayage est un microscope à balayage confocal.
